# EUROPÄISCHE PATENTSCHRIFT

(11) **EP 1 643 853 B1**
(45) Veröffentlichungstag und Bekanntmachung des Hinweises auf die Patenterteilung: **24.10.2007**
(21) Anmeldenummer: 04740096.5
(22) Anmeldetag: 19.06.2004
(51) Int. Cl.: A23K 1/00, B01J 2/16, A23K 1/16

(54) **VERFAHREN ZUR GRANULATION EINES TIERFUTTERMITTEL-ZUSATZES**
METHOD FOR THE GRANULATION OF AN ANIMAL FOOD ADDITIVE
PROCEDE DE GRANULATION D'UN ADDITIF POUR L'ALIMENTATION ANIMALE

(30) Priorität: 11.07.2003 DE 10331366
(43) Veröffentlichungstag der Anmeldung: 12.04.2006
(60) Teilanmeldung: 07111607.3
(73) Patentinhaber: Degussa GmbH, 40474 Düsseldorf (DE)
(72) Erfinder: ALT, Hans, Christian, 63571 Gelnhausen-Meerholz (DE); STOCKHAMMER, Stefan, 61130 Nidderau (DE); MOLL, Matthias, 63755 Alzenau (DE); POHLISCH, Joachim, 63571 Gelnhausen (DE); KLASEN, Claas, Jürgen, 63579 Freigericht (DE)
(86) Internationale Anmeldenummer: PCT/EP2004/006655
(87) Internationale Veröffentlichungsnummer: WO 2005/006875

(56) Entgegenhaltungen:
- EP-A- 0 407 325
- US-A- 4 946 654
- US-A- 5 840 358
- US-A1- 2004 115 304
- US-B1- 6 238 714
- ULLMANN: "Ullmann's encyclopedia of industrial chemistry, ed. 5, vol. b4" 1993, ULLMANN * das ganze Dokument *

## Beschreibung

Die Erfindung bezieht sich auf ein Verfahren zur Granulation eines Aminosäuren oder Vitamine enthaltenden Tierfuttermittel-Zusatzes in einer zirkulierenden Wirbelschicht, wobei der Zusatz bevorzugt ein Fermentationsprodukt ist und gegebenenfalls weitere Inhaltsstoffe aus der Fermentationsbrühe enthält.

Tierfuttermittel werden mit einzelnen Aminosäuren entsprechend dem Bedarf der Tiere supplementiert. Zur Supplementierung von Tierfuttermitteln, z. B. mit L-Lysin, wird bisher überwiegend das L-Lysin-monohydrochlorid mit einem L-Lysin-Gehalt von 78% eingesetzt. Da das L-Lysin durch Fermentation hergestellt wird, muss es zur Herstellung des Monohydrochlorids zunächst einmal von allen übrigen Bestandteilen der rohen Fermentationsbrühe in aufwendigen Verfahrensschritten abgetrennt, dann in das Monohydrochlorid umgewandelt und letzteres zur Kristallisation gebracht werden. Dabei fallen eine große Anzahl von Nebenprodukten und die zur Aufarbeitung notwendigen Reagentien als Abfall an. Da eine hohe Reinheit des Tierfuttermittelsupplements nicht immer notwendig ist und zudem in den Nebenprodukten der Fermentation oft noch nutritiv wirksame Wertstoffe enthalten sind, hat es daher in der Vergangenheit nicht an Versuchen gefehlt, L-Lysin zusammen mit Bestandteilen der Fermentationsbrühe kostengünstiger in ein festes Tierfuttermittel zu überführen.

Als gravierender Nachteil bei der Verarbeitung hat sich die komplexe Zusammensetzung solcher Medien erwiesen. Diese sind generell nur schlecht zu trocknen, die getrockneten Produkte häufig hygroskopisch, praktisch nicht rieselfähig, verklumpungsgefährdet, und für die technisch anspruchsvolle Verarbeitung in Mischfutterwerken nicht geeignet. Vor allem die Produkte aus der Fermentation zur Herstellung von Lysin sind hier zu nennen. Die einfache Entwässerung der rohen Fermentationsbrühe durch Sprühtrocknung führt zu einem staubigen, stark hygroskopischen und nach kurzer Lagerzeit klumpigen Konzentrat, das in dieser Form nicht als Tierfuttermittel eingesetzt werden kann.

Der Einsatz eines Sprühtrockners mit integrierter Wirbelschicht liefert ein feinteiliges und poröses, aber rieselfähiges Sprühkorn mit sehr geringer Schüttdichte und immer noch hoher Hygroskopizität. Beim Handling dieses Produktes entsteht eine erhebliche Staubbelastung.

Eine Aufbaugranulation in der Wirbelschicht erwies sich ebenfalls als wenig geeignet, da auch hier große Mengen Zuschlagstoffe (i. d. R. mehr als 10 Gew.-%) erforderlich sind, wobei diese gemäß DD 268 856 kontinuierlich zugegeben werden. Dabei ist deren Einsatz insbesondere deswegen essentiell, um aus der Fermentationsbrühe das Wasser zu binden, und so ein Verklumpen des Granulats zu verhindern, was sich insbesondere bei der Aufbaugranulation nachteilig auswirken würde.

Weitere Verfahren zur Granulation von Aminosäuren enthaltenden Tierfuttermittel-Zusätzen auf Fermentationsbrühebasis sind aus der US 4,777,051, der EP 0 615 693 B und der EP 0 533 039 B bekannt.

Die US 4,777,051 offenbart ein Sprühtrocknungsverfahren mit nachgeschaltetem zusätzlichen Trocknungsschritt. Tryptophan- oder Threonin-Lösungen unterschiedlichen Ursprungs mit einem Gehalt von 20 - 60 wt-%, bezogen auf den Gesamt-Feststoffgehalt, werden in einem ersten Schritt zu einem halbtrockenen Granulat mit einer Restfeuchte von 5 -15% versprüht. Anschließend wird das feuchte Granulat auf einem Förderbandtrockner mit Lochboden ausgebreitet und mit heißer Luft endgetrocknet, wobei ein Produkt von etwa 4 Gew.-% Restfeuchte erhalten wird.

Die Trocknung wird demnach aufwendig in zwei Stufen in zwei verschiedenen Apparaten ausgeführt.

Gemäß EP 0 615 693 wird die Granulation ebenfalls in einem zweistufigen Trocknungsverfahren durchgeführt.

Die Fermentationsbrühe wird gegebenenfalls nach Entfernung eines Teils der Inhaltsstoffe zu einem Feinkorn, das zu mind. 70 Gew.-% eine maximale Partikelgröße von 100 µm hat, sprühgetrocknet, und das so erhaltene Feinkorn in einer zweiten Stufe zu einem Granulat aufgebaut, das zu mind. 30 Gew.-% Feinkorn enthält.

Neben der Zweistufigkeit des Trocknungs-Granulationsverfahrens ist bei diesem Prozess von Nachteil, dass die Granulation nur chargenweise und nicht kontinuierlich erfolgen kann.

Aus der EP 0 809 940 B1 ist ebenfalls ein Verfahren zur Granulation eines Tierfuttermittel-Zusatzes auf Fermentationsbrühe-Basis bekannt. Das Verfahren ist dadurch gekennzeichnet, dass die Fermentationsbrühe in einer Wirbelschicht in einem Schritt granuliert, kompaktiert und getrocknet wird, während eine zur Einstellung eines gewünschten Korndurchmessers und einer gewünschten Schüttdichte ausreichende Energiemenge zusätzlich zu der Erzeugung der stationären Wirbelschicht benötigten Energie auf mechanischem Weg in die Wirbelschicht eingetragen wird.

Ein wesentliches Merkmal der Wirbelschicht-Sprühgranulation ist die Ausbildung einer stabilen Wirbelschicht innerhalb des Granulators. Das bedeutet, dass die Geschwindigkeit des Anströmmediums so gewählt werden muss, dass es zur Fluidisierung der zu trocknenden Teilchen kommt, die pneumatische Förderung aber vermieden wird. Somit wird sichergestellt, dass die gebildeten Teilchen zwar nicht ausgetragen werden, aber ein ständiger Platzwechsel der Teilchen stattfindet, so dass eine gleichmäßige Auftreffwahrscheinlichkeit für die eingesprühten Tropfen gegeben ist.

Dieses Verfahren weist die bekannten Nachteile der Wirbelschicht-Sprühgranulation auf. Dies sind hauptsächlich:

Mit abnehmender Partikelgröße muss die Geschwindigkeit des Anströmmediums stark reduziert werden, damit eine stabile stationäre Wirbelschicht aufrecht erhalten und ein Austrag der Partikel aus dem Granulator vermieden wird. Da bei diesem Verfahren das Anströmmedium der Energieträger ist, geht die Leistungsfähigkeit extrem zurück. Die erzielbaren Aufbauraten werden zu gering, um das Granulationsverfahren noch wirtschaftlich betreiben zu können.

Ein Verfahren dieses Typs wird in der US 4,946,654 beschrieben. Einen Verlust an Material durch den Austrag von Staub wird dadurch vermieden, dass dieser von dem aus dem Granulator strömenden Gas abgetrennt und in das Wirbelbett zurückgeführt wird.

Die Leitungen sind so dimensioniert, dass nur geringe Feststoffmengen zurückgeleitet werden können.

Aufgabe der Erfindung ist es, ein kontinuierlich durchführbares effizientes Verfahren zur Granulation eines Aminosäuren und Vitamine enthaltenden Futtermittelzusatzes bereitzustellen, wobei der Zusatz bevorzugt ein Fermentationsprodukt ist und gegebenenfalls weitere Inhaltsstoffe incl. der Biomasse aus der Fermentationsbrühe enthält.

Die Erfindung betrifft ein Verfahren gemäß Anspruch 1.

Vorteilhafterweise durchströmt das Trocknungsgas die Kammer entgegen der Gravitationskraft und wird über einen Anströmboden mit einer Temperatur im Bereich von 100 bis 450°C, bevorzugt von 150 bis 350°C in die Kammer eingeleitet.

Im Unterschied zum Stand der Technik wird auf diese Weise erfindungsgemäß nicht in einer stationären Wirbelschicht, sondern in einer zirkulierenden Wirbelschicht (Circulating Fluidised Bed CFB) granuliert. Das bedeutet, dass die Anströmgeschwindigkeit des Trocknungsgasstrom so eingestellt wird, dass 30 bis 100 Gew.-%, insbesondere 50 bis 100 Gew.-%, der Feststoffpartikel, bezogen auf die Wirbelschicht in der Granulatorkammer, diese Kammer kontinuierlich nach oben verlassen, dann aus dem Gasstrom abgetrennt und in die Granulatorkammer zurückgeführt werden.

Die zum Austrag notwendige Anströmgeschwindigkeit ist abhängig von der Teilchengröße und der Dichte der Partikel und beläuft sich im allgemeinen auf das 1 bis 10-fache, bevorzugt 1 bis 4-fache der Geschwindigkeit, die notwendig ist um auch Teilchen, die nicht zum Feinstaub gehören (< 100 µm), in der gewünschten Menge mit dem Trocknungsgasstrom zirkulieren zu lassen. Dabei handelt es sich insbesondere um Teilchen, die noch nicht die gewünschte Endgröße erreicht haben.

Bei den klassischen Wirbelbettverfahren (z.B. US 4,946,654) werden nur sehr kleine Mengen feiner Staub ausgeblasen und die Teilchen mit einer Korngrößenverteilung im Bereich von > 100 µm verbleiben in der Wirbelschicht und werden aus dieser abgezogen, aber nicht zirkuliert.

Erfindungsgemäß werden Teilchen mit Korngrössen < und > 100 µm, wenn gewünscht auch im Bereich von 250 µm bis 600 µm in der gewünschten Menge nach oben gefördert und zirkuliert.

Die Zirkulationsrate pro Stunde entspricht erfindungsgemäß im allgemeinen dem 2 bis 100-fachen, insbesondere dem 5 bis 50-fachen des Massen-hold-ups in der Granulatorkammer. Nach dem Stand der Technik beläuft sich der Wert für diesen Parameter im Wirbelbett dagegen auf < 2. Die Obergrenze der Anströmgeschwindigkeit ergibt sich durch die Vorgaben der apparativen Handhabbarkeit.

Es wurde auch gefunden, dass durch den zusätzlichen Eintrag von mechanischer Energie in die Wirbelschicht ein weniger starkes Granulatorwachstum bzw. eine Nivellierung der Partikeldurchmesser und eine Erhöhung der Schüttdichte erreicht wird.

Besonders vorteilhaft wird das Granulationsverfahren so ausgeführt, dass die zusätzliche Energie durch bewegliche flächenförmige Gebilde in das Wirbelbett in der Granulationskammer eingetragen wird. Hierbei kann es sich um rotierende Messer, Flügel, Klingenflächen, Flacheisen oder Verdichter handeln, welche in der Kammer des Wirbelbetts angebracht sind. Dabei ist es möglich, die Messer, Klingen, Flacheisen, Verdichter oder dergleichen mechanisch anzutreiben und so eine ständige Zerkleinerung der Granulationskörner zu erzielen, so dass die Partikel des Wirbelbettes unter einer gewissen Korngröße bleiben. Es sind jedoch auch alle anderen dem Fachmann geläufigen Werkzeuge möglich, welche beispielsweise direkt in das Wirbelbett eintauchen können. So ist die Verwendung von rotierenden Schnecken oder stark scherenden Mischwerkzeugen vorstellbar, wobei auch diese Werkzeuge auf das Korn oder Granulat im Wirbelbett einwirken und mit den Partikeln in Wechselwirkung treten.

Das CFB-Verfahren ist vor allem aus der heterogenen Katalyse bei der Verwendung feinteiliger Katalysatoren oder der Verbrennungstechnologie bekannt, nicht aber zur Granulatbildung organischer Verbindungen.

Bei den zu granulierenden Feststoffen handelt es sich um Tierfuttermittelzusätze, vorzugsweise um Aminosäuren und Vitamine. Bei den Aminosäuren vorzugsweise um L-Arginin, Methionin, L-Lysin, L-Threonin und L-Tryptophan, bei den Vitaminen vorzugsweise um Calciumpantothenat (Vitamin B5) oder Pantothensäure.

Zum Einsatz kommen dabei konzentrierte wässrige Lösungen oder Suspensionen der gereinigten Verbindungen aus chemischer sowie fermentativer Produktion mit einer Reinheit des Feststoffes von 80 bis ca. 99,5%, sowie aufkonzentrierte Fermentationsbrühen. Die Fermentationsbrühen enthalten wie in EP 0 809 940 B1 und EP 615 693 B1 insbesondere für L-Lysin beschrieben neben diesen Verbindungen gegebenenfalls noch weitere Bestandteile der Fermentationsbrühe sowie die Biomasse. Die Biomasse kann aber auch ganz oder teilweise bereits abgetrennt sein.

Es wurde festgestellt, dass mit dem erfindungsgemäßen Verfahren im Gegensatz zu bekannten Verfahren der stationären Wirbelschicht-Sprühgranulation mit den genannten Feststoffen auch für Partikel mit einem relativ geringen mittleren Durchmesser von z. B. 100 bis 400 µm hohe Aufbauraten und damit ein effizientes Verfahren realisiert werden können. Es können sogar Partikel im Größenbereich kleiner 100 µm über eine Wirbelschicht-Sprühgranulation zugänglich sein.

Die Effizienz des Verfahrens ist auch abhängig von dem Gehalt des Feststoffes in Aufgabelösung. Mit steigendem Feststoffanteil sinkt die zu verdampfende Wassermenge. Der für die Granulation notwendige Energiebedarf reduziert sich und die Apparatur kann kleiner ausgeführt werden. Für relativ schlecht lösliche Feststoffe wie z. B. L-Threonin (Löslichkeit bei 85°C ca. 19%) wurde die Löslichkeit und damit die Effizienz des Verfahrens in der Überhitzung des Aufgabemediums gefunden. Mit einer speziellen Düsenanordnung wird ein Vordruck von 1 bis zu 5 bar in der Zulaufleitung zu den Düsen erzeugt, der eine Erhitzung auf über 100 bis 160°C ermöglicht. Die spezielle mit Pressluft betriebene Zweistoffdruckdüse besitzt einen verlängerten Flüssigkeitseinsatz mit einem Dreinutendrallkörper. Der Drallkörper ist so bemessen und eingestellt, dass der freie Querschnitt den die Flüssigkeit passieren muss möglichst groß ist und trotzdem unter Betriebsbedingungen ein hoher Druckabfall von bis zu 5 bar in der Flüssigkeitstrecke erzielt wird. Gleichzeitig können trotz dieser Anstauung im Fluid enthaltene Feststoffpartikel mit einer Teilchengröße bis 50 µm die Düse passieren. Die Zerstäubung der durch den Drallkörper tretenden Flüssigkeit erfolgt pneumatisch durch Entspannen verdichteter Luft im Ringspalt um den Flüssigkeitseinsatz.

Die Löslichkeit von L-Threonin steigt bei 120°C auf ca. 32%. Überraschenderweise wurden dabei auch bei den hitzeempfindlichen Aminosäuren und Vitaminen während des Ablaufs der Granulation keinerlei Zersetzungsreaktionen und damit Produktverluste festgestellt.

Die Erhöhung der Feststoffkonzentration kann auch durch den Einsatz von Suspensionen des entsprechenden Feststoffes in einer gesättigten Lösung des entsprechenden Feststoffes erfolgen. Diese kann erzeugt werden durch

Überkonzentration einer den Feststoff enthaltenden Lösung durch Eindampfung etc.

Zugabe des Feststoffes zu einer gesättigten Lösung des Feststoffes.

Beim Einsatz von Suspensionen bietet eine kleine Partikelgröße (im allgemeinen 10 - 30 µm) des ungelösten Feststoffanteils Vorteile bei der Erzeugung von stabilen Granulaten. Wenn notwendig, kann die Partikelgröße des ungelösten Anteils entsprechend verringert werden durch
eine vorherige Trockenvermahlung des zugegebenen Feststoffanteils
eine Nassvermahlung in der Suspension, bevorzugt durch nur einen Durchgang durch das Mahlorgan in der Zulaufleitung zur Sprühdüse.

Mit dem beschriebenen Verfahren ist es möglich, Suspensionen mit Feststoffkonzentrationen bis über 70 Gew.-% zu verarbeiten.

Bevorzugt eingesetzt werden Suspensionen mit einem Gehalt von 25 bis 60 Gew.-%, bezogen auf die Gesamtmenge der Suspension.

Überrascherweise konnten mit dem beschriebenen Verfahren auch aus Lösungen oder Suspensionen von sehr reinen Feststoffen (bis 99,5%) ohne Zugabe von Bindemitteln oder anderen Hilfsstoffen Granulate mit den geforderten Eigenschaften erzeugt werden.

Ein weiterer Gegenstand der Erfindung ist eine Vorrichtung zur Durchführung des erfindungsgemäßen Verfahrens, welche folgende Merkmale aufweist:
a) eine zylindrische oder rechteckige Granulatorkammer mit einem Durchmesser-Höhe-Verhältnis von 1:1 bis 1:5 (im Falle der rechteckigen Ausführung betragen die Abmessungen Breite:Länge:Höhe von 1:1:1 bis 1:8:5), die einen Anströmboden enthält,
b) ein in dieser Kammer angeordneten Zerstäubungsorgan für die Suspension oder Lösung,
c) Zuführorgan für das Fluidisier- bzw. Trocknungsmedium
d) eine im oberen Teil der Kammer angeordnete Austragsöffnung für das zu recyclierende Produkt,
e) ein Feststoffabscheidesystem , das über diese Austragsöffnung mit der Kammer verbunden wird, und das ein gegebenenfalls mit einer Filtereinheit versehenes Abluftrohr zur Abführung des Gasstromes enthält,
f) eine Rückführung für das zu recyclierende Produkt, die ausgehend von der Austragsöffnung in dem unteren Teil der Kammer mündet,
g) gegebenenfalls ein Sichter , der am unteren Teil der Kammer angebracht ist.

Die Vorrichtung besteht aus einer vorzugsweise hohen Granulationskammer 1 mit einem Breite zu Länge zu Höhe Verhältnis von 1:1:1 bis 1:8:5, vorzugsweise 1:6:3. Sie ist am unteren Ende mit einem geeigneten Anströmboden versehen. Der Druckverlust des Bodens muss so bemessen sein, dass sich das Anströmmedium gleichmäßig auf den vollen Apparatequerschnitt verteilt und keine Totzonen vorhanden sind. Nach einem weiteren rechteckig oder zylindrischen Teil der auch expandierend auf die doppelte Breite oder Durchmesser erweitert ausgeführt werden kann mündet die Abgasführung des Granulators in das Abscheidesystem, beispielsweise über ein oder mehrere in Reihe geschaltete Abscheidezyklone und einen Abluftfilter in die Kreisgasleitung oder den Abgaskamin. Die Feststoffabscheider sind mit Feststoffrückführleitungen in die Granulationskammer knapp über dem Anströmboden versehen. Zum pneumatischen Abschluss der Feststoffabscheider werden geeignete Apparate wie zum Beispiel Zellradschleusen eingesetzt. Die Granulationskammer wird über einen Ventilator und einen geeigneten Gaserhitzer mit heißem Trocknungsgas (zum Beispiel Rauchgas, Luft, Stickstoff) versorgt.

Ein sichtendes Austragsrohr, das vielfältige Formen besitzen kann, ist vorzugsweise am unteren Ende der Granulationskammer mittig angebracht und mündet in einer Aussparung des Anströmbodens. Es kann mit Einbauten zur Verstärkung der Sichterleistung versehen werden, oder mit einer Sichterkammer verbunden sein. Über eine vom Hauptstrom unabhängige Gasversorgung kann im Sichterrohr eine definierte sichtende Aufwärtsströmung eingestellt werden. Entgegen dieser Strömung kann der Feststoff über einen weiteren pneumatischen Abschluss ausgetragen werden.

Um annähernd sphärische Teilchen zu erzeugen, ist es vorteilhaft, die Suspension oder Lösung in sehr feine Tröpfchen zu zerteilen. Zur Zerstäubung der Suspension oder Lösung können pneumatische Düsen und Druckdüsen eingesetzt werden. Vorzugsweise kommt eine kombinierte Zweistoffdruckdüse zum Einsatz, wobei die Suspension über eine vielstufige pulsationsarme Hochdruckpumpe zur Düse gefördert wird. Es können auch eine Dreistoffdüse oder Mehrstoffdüse eingesetzt werden. Der Druckeinsatz dieser Düse sollte so bemessen sein, dass mit den Durchflussraten unter Betriebsbedingungen ein hoher Druckabfall erzielt wird. Um ein sehr feines Spray zu erhalten, wird dabei die Druckzerstäubung noch durch eine zusätzliche Zweistoffzerstäubung mittels Pressluft überlagert.

Die Düse sitzt vorzugsweise unten über dem Anströmboden zentral in der Mitte der Granulationskammer über der Sichteröffnung mit der Sprührichtung nach oben. Mit einer verstellbaren Luftkappe kann der Düsenstrahl und damit der Öffnungswinkel eingestellt werden.

Die Granulation von Feststoffen in der zirkulierenden Wirbelschicht (CFB) erfolgt auf die im folgendem beschriebene Weise. Wesentlich ist, dass die Anströmgeschwindigkeit des heißen Trocknungsgases in der Granulationskammer bevorzugt deutlich über der Austragsgeschwindigkeit granulierenden Partikel liegt.

Mit der Düse wird eine feststoffhaltige Suspension oder Lösung in die mit heißem Trocknungsgas betriebene entweder noch feststofffreie oder bereits mit einer Startfüllung an feinen Partikeln versehenen Granulationskammer gesprüht. Dort verdampft die Flüssigkeit und Feststoffe bleiben übrig. Der sich in der Granulationskammer bildende Partikelstrom wird bis zu 100% aus dieser Kammer ausgetragen, anschließend zum Beispiel mit Hilfe von Zyklonen abgeschieden und in die Kammer recykliert. Dies geschieht vorzugsweise mit einer sehr hohen Zirkulationsrate. Bevorzugte Zirkulationsraten betragen das 2 bis 100-fache, besonders bevorzugt das 5 bis 50-fache des Massen-hold-ups im Granulator pro Stunde.

Um genügend Sprühkeime zur Aufnahme der Suspensionströpfchen in dieser zirkulierenden Masse zu haben, ist es erforderlich, einen ausreichenden Massen-hold-up im System zu halten, was mit einem hohen zirkulierenden Massenstrom einhergeht. Die Auslegung der Feststoffabscheidung des Abgasstroms ist diesem hohen Durchsatz anzupassen.

Als Messgröße für den zirkulierenden Massenstrom kann eine Druckverlustmessung zum Beispiel über den ersten Zyklon eingesetzt werden. Mit höherer Feststoffbeladung erhöht sich bei sonst gleichen Betriebsbedingungen der Druckabfall über den Zyklon. Ist der Zyklon überladen und schlägt durch, erreicht der Differenzdruck dann einen nicht weiter ansteigenden Maximalwert. Der anzustrebende Betriebspunkt ist etwas unter diesem Niveau.

In der Aufwärtsströmung der Trockenkammer wird der rezyklierte Feststoff an der Düse vorbei nach oben gefördert. Im Düsenstrahl treffen sich Feststoffteilchen und Sprühtröpfchen. Die Flüssigkeit trocknet auf der Oberfläche der Partikel ab, und es verbleibt der enthaltene Feststoff. Dadurch wachsen die Partikel in der Zirkulationsschicht an. Um möglichst sphärische Granulate zu erzielen, müssen die Sprühtropfen wesentlich kleiner als die im Kreis geführten Granulate sein.

Die zirkulierende Masse muss konstant gehalten werden, so dass nach dem Aufbau eines ausreichenden Massen-hold-ups im Granulator ein Teil der darin befindlichen Masse kontinuierlich ausgetragen werden muss. Durch Zurücknahme der Gasströmung des integrierten Sichters werden nur die groben Teilchen ausgetragen und das Feingut verbleibt zum weiteren Granulataufbau im Granulator. Der Sichter wird so geregelt, dass die im System zirkulierende Masse konstant bleibt.

Die im Austrag zu erzielende Korngröße ist von der Keimbilanz im Granulator abhängig. Diese wird wesentlich vom Gleichgewicht von Keimbildung durch Abrieb oder nicht treffende Sprühtropfen und dem Granulataufbau bestimmt. Gezielt kann die Korngröße einerseits durch die Wahl der Trocknungsparameter oder andererseits durch Zugabe von Bindemittel erhöht werden.

So können andere Trocknungsparameter durch die Erhöhung der Feedmenge eingestellt werden. Dadurch sinkt die Ablufttemperatur und es werden mehr Sprühtröpfchen erzeugt, die langsamer trocknen. Damit erhöht sich die Trefferwahrscheinlichkeit auf die Granulatkeime, zu dem bleibt die Granulatoberfläche länger feucht. Es bilden sich im Mittel größere Keime.

Der Zusatz von Bindemittel erhöht die Granulatfestigkeit, wodurch der Abrieb verringert wird. Damit entstehen weniger Keime. Wiederum erhöht sich die mittlere Korngröße der Granulate.

Das erfindungsgemäße Verfahren kann durch eine in das Verfahren integrierte Produkttrocknung ergänzt werden.

Die Aufgabe der Erfindung ist es, ein Verfahren zu entwickeln, um näherungsweise sphärische, massive Partikel mit enger Partikelgrößenverteilung im Partikelgrößenbereich von 100 µm bis 2000 µm und guten Schütteigenschaften (geringer Abrieb, geringer Staubgehalt, gutes Fließverhalten) aus einer Feststoffsuspension oder Lösung herzustellen.

Vorzugsweise wird das Verfahren zur Herstellung von Futtermittelzusätzen so betrieben, dass die mittlere Partikelgröße des Tierfuttermittelzusatzes auf Werte zwischen > 0,1 und 2,0 mm eingestellt wird. Vorzugsweise liegt der Durchmesser von 95% der Partikel im Bereich zwischen > 0,1 und 1,2 mm. Darüber hinaus ist es besonders zweckmäßig, wenn der Durchmesser der Teilchen so eingestellt wird, dass er bei 95% der Partikel im Bereich zwischen 0,3 und 0,8 mm liegt. In einer noch weiteren vorzugsweisen Variante des erfindungsgemäßen Verfahrens ist es bevorzugt, dass er bei 95% der Partikel im Bereich zwischen 0,5 und 1,2 mm liegt.

Mit dem erfindungsgemäßen Verfahren erhält man in einem Schritt aus einer Fermentationsbrühe, die bevorzugt eingedickt ist, teilweise oder ganz von Biomasse befreit oder im Originalzustand sein kann, ein Produkt mit einer gewünschten Schüttdichte. Dabei ist die Schüttdichte des Tierfuttermittelzusatzes vorzugsweise auf > 600 kg/m³ bis 700 kg/m³ eingestellt. In noch weiterer zweckmäßiger Verfahrensmodifikation lässt sich die Erfindung so ausführen, dass in einem einzigen Schritt die Schüttdichte des Tierfuttermittelzusatzes auf > 650 kg/m³ bis 800 kg/m³ eingestellt wird.

Daneben lassen sich nach dem erfindungsgemäßen Verfahren Tierfuttermittelzusätze mit herausragender Abriebsfestigkeit des Granulates erhalten. So ist es bei geeigneter Verfahrensführung ohne weiteres möglich, die Abriebsfestigkeit des Tierfuttermittelzusatzes auf Abriebswerte im Bereich von < 1,0 Gew.-% einzustellen. Besonders bevorzugt wird das Verfahren der Erfindung so geführt, dass die Abriebsfestigkeit des Tierfuttermittelzusatzes auf einen Abrieb zwischen 0 und 0,3 Gew.-% eingestellt wird.

Üblicherweise enthalten die erfindungsgemäß zugänglichen trockenen Additive bis zu 20% Fermentationsbiomasse.

Höhere Aminosäuregehalte bis max. 90% in der Trockenmasse sind z. B. bei der Herstellung von L-Threonin mit Escherichia coli erreichbar.

Bei der Herstellung von L-Lysin, L-Arginin bzw. L-Tryptophan mit Corynebacterium glutamicum bzw. Escherichia coli K12 Abkömmlingen liegt der Aminosäuregehalt i. d. R. etwas niedriger, insbesondere bei Tryptophan sind fermentativ derzeit maximale Gehalte von 70 Gew.-% typisch.

Vorzugsweise liegt im gemäß der Erfindung erhältlichen Additiv überwiegend nur eine Komponente, insbesondere eine Aminosäure, als Wirkstoff vor. Ein solches Additiv ist dann universell entsprechend seinem Wirkstoffgehalt zu jedem Futter oder zu Prämixen zudosierbar. Bei definierten Futtermischungen kann es aber auch zweckmäßig sein, dass mehrere Komponenten, insbesondere Aminosäuren, in dem Additiv in einem bestimmten Verhältnis zueinander vorliegen, so dass mit nur einem Additiv die gewünschte Anreicherung erreicht wird. Das Verhältnis dieser Wirkstoffe kann beispielsweise durch Mischen mehrerer Fermentationsbrühen oder Additive sowie auch durch Zudosieren der reinen Wirkstoffe L-Aminosäuren oder Vitamine erhalten werden. Neben einem einzelnen Wirkstoff oder mehreren gezielt enthalten bzw. definierten Wirkstoffen im Additiv sollten möglichst wenig weitere undefinierte oder nicht zur Supplementierung geeignete Wirkstoffe im Additiv vorhanden sein.

Um den Aminosäuregehalt in der Trockenmasse zu erhöhen oder um die Trockenmasse auf einen bestimmten Gehalt an Aminosäure zu standardisieren oder um den Proteingehalt der Trockenmasse zu erniedrigen, kann die Biomasse ggf. andere Stoffe durch mechanische Trenntechniken und unter Belassen der überwiegenden Anteile der restlichen Komponenten der Fermentationsbrühe vorzugsweise nach Ende der Fermentation entfernt werden.

Wenn keine Biomasse abgetrennt werden soll, ist die Fermentation vorteilhaft so zu führen, dass möglichst wenig Biomasse produziert wird, wobei die zugegebenen Nährstoffe am Ende möglichst weitgehend verbraucht sein sollen. Eine solche Fermentation ist z. B. in der DE-A 41 30 867, Beispiel 3, beschrieben. Vorteilhafterweise wird die Fermentation so geführt, dass über mindestens 30%, vorzugsweise über 70%, der Fermentationsdauer die Konzentration an verwertbarem Zucker in der Fermentationsbrühe höchstens 0,3 Gew.-% beträgt.

Die granulierten Futtermittelzusätze enthalten L-Aminosäuren oder Vitamine in einer Menge von 40 bis ~ 100 Gew.-%, bevorzugt 40 bis 85%.

Als Aminosäure produzierende Mikroorganismen werden für Lysin bevorzugt geeignete Mutanten der Spezies Corynebacterium oder Brevibacterium verwendet.

Als Kohlenstoffquelle werden vorzugsweise Hydrolisate von Maniok Stärke (Cassava), High Fructose Corn Sirup (HFCS), Stärkehydrolysate (Glucose) oder Saccharose eingesetzt. Ein geringer Anteil kann auch aus Zuckerrüben oder Zuckerrohrmelasse stammen. Dieser Anteil sollte 5 Gew.-% der Gesamtkohlenstoffquelle nicht überschreiten (= 10 Gew.-% Melasse in der Gesamtkohlenstoffquelle).

Für Threonin, Tryptophan oder Pantothensäure werden bevorzugt geeignete Mutanten der Spezies Escherichia coli oder Corynebakterium oder Corynebacterien eingesetzt.

Als Stickstoffquelle dienen neben Ammoniak oder Ammoniumsulfat Hydrolysate von Protein enthaltenden Stoffen, wie Maiskleber, Sojamehl oder der Biomasse aus einem vorhergehenden Ansatz oder beispielsweise Maisquellwasser oder Fischpepton.

Die Fermentationstemperatur liegt zweckmäßigerweise zwischen 30 und 40 °C, der pH-Wert des Fermentationsmediums zwischen 6,0 und 8,0. Die Dauer der Fermentation beträgt im allgemeinen 100 h und mehr.

Nach dem Ende der Fermentation werden im allgemeinen die Mikroorganismen thermisch oder auch durch andere Verfahren, z. B. durch Zusatz einer Mineralsäure, wie Schwefelsäure, abgetötet.

Anschließend wird ggf. die Biomasse ganz oder teilweise nach bekannten Verfahren, wie Separieren, Dekantieren, einer Kombination von Separieren und Dekantieren, Ultrafiltration oder Mikrofiltration, abgetrennt.

Die Fermentationsbrühe wird dann durch bekannte Verfahren, z. B. in einem Dünnschicht- oder Fallfilmverdampfer, zu einem Vorkonzentrat mit einem Feststoffgehalt von 30 bis 60 Gew.-% eingedickt. Dieses Vorkonzentrat kann dann ebenso wie die Fermentationsbrühe direkt dem erfindungsgemäßen Verfahren unterworfen werden.

Sofern eine Standardisierung des erfindungsgemäßen Tierfuttermittels bezüglich des Gehalts der L-Aminosäure erwünscht ist, kann dies beispielsweise durch entsprechende Wahl der Menge an verbleibender Biomasse und/oder geeignetes Abmischen von Vorkonzentraten und/oder Fermentationsbrühen erfolgen. Entsprechend können auch Biomasse-freie oder -reduzierte Brühen mit Originalbrühen zur Standardisierung gemischt werden. Eine andere Möglichkeit ist der Zusatz geringer Mengen an futtermittelrechtlich unbedenklichen Zuschlagstoffen, wie Weizenkleie, Maisspindelmehl oder Perlite oder auch der Zusatz reiner L-Aminosäuren oder Vitamine.

Die gemäß dem Verfahren der Erfindung erhältlichen Tierfuttermittel-Additive finden Verwendung zur Supplementierung oder Herstellung eines Tierfuttermittels oder Prämixes für Tierfuttermittel.

Sie enthalten Biomasse gegebenenfalls in einer Menge von > 0 bis 20.Gew.-% (Trockenmasse).

### Beispiele.

1) Gereinigte Lösungen von L-Threonin werden in einem zirkulierenden Wirbelbett versprüht. Die Reinheit des L-Threonins lag bei über 98,5% (d₁₀: 10% der Teilchen haben die angegebene max. Korngröße).

| Konz. THR | Beschreibung Zulauf an der Düse | Temp. Zulauf an der Düse °C | Volumenstrom Nm³/h | Temperatur °C | Korngröße d10 µm | Korngröße d50 µm | Korngröße d90 µm | Schüttdichte g/L | Zirkulations-rate /h | Anströmgeschwindigkeit m/sec |
|---|---|---|---|---|---|---|---|---|---|---|
| 20% | Lösung | 98 | 650 | 250 | 90 | 268 | 475 | 595 | 30-50 | 1,8 |
| 30% | Überhitzte Lösung | 120 | 450 | 350 | 138 | 275 | 620 | 694 | 10-30 | 1,2 |
| 40% | Suspension | 120 | 450 | 350 | 127 | 329 | 1000 | 576 | 10-30 | 1,2 |
| 50% | Suspension | 120 | 450 | 350 | 83 | 204 | 496 | 644 | 10-30 | 1,2 |

2) Von Biomasse befreite Threonin-Fermentationsbrühen werden in einem zirkulierenden Wirbelbett versprüht. Die Reinheit des L-Threonins lag bei 80%.

| Konz. THR | Beschreibun g Zulauf an der Düse | Temp. Zulauf an der Düse °C | Volumenstrom Nm³/h | Temperatur °C | Korngröße d10 µm | Korngröße d50 µm | Korngröße d90 µm | Schüttdichte g/L | Zirkulations-rate /h | Anströmgeschwindigkeit m/sec |
|---|---|---|---|---|---|---|---|---|---|---|
| 22,7% | Lösung | 95 | 650 | 210 | 120 | 395 | 730 | 650 | 20-40 | 1,8 |

3) Von Biomasse befreite - Calciumpantothenat-Fermentationsbrtihen werden in einem zirkulierenden Wirbelbett versprüht.
Die Reinheit des Calciumpantothenat lag bei 55%.

| Konz. Cal. Pan. | Beschreibung Zulauf an der Düse | Temp. Zulauf an der Düse °C | Volumenstrom Nm³/h | Temperatur °C | Korngröße d10 µm | Korngröße d50 µm | Korngröße d90 µm | Schuttdichte g/L | Zirkulat ions-rate /h | Anströmgeschwindigkeit m/sec |
|---|---|---|---|---|---|---|---|---|---|---|
| 27,5% | Lösung | 95 | 650 | 120 | 170 | 350 | 530 | 650 | 30-50 | 1,8 |

## Patentansprüche

1. Verfahren zur Granulierung von Aminosäuren und/oder Vitaminen und gegebenenfalls Bestandteile aus der Fermentationsbrühe enthaltenden Futtermitteladditiven, **dadurch gekennzeichnet, dass** man die Granulation in einer zirkulierenden Wirbelschicht durchführt, wobei die Anströmgeschwindigkeit des Trocknungsgasstroms so eingestellt wird, dass 30 bis 100 Gew.-% der Feststoffpartikel, bezogen auf die Wirbelschicht in der Granulatorkammer, diese Kammer kontinuierlich nach oben verlassen, dann aus dem Gasstrom abgetrennt und in die Granulatorkammer zurückgeführt werden.

2. Verfahren gemäß Anspruch 1, **dadurch gekennzeichnet, dass** man
a) eine wässrige Suspension oder eine wässrige Lösung der Aminosäure oder eines Vitamins in einer die Wirbelschicht enthaltenden Granulationskammer versprüht,
b) 30 bis 100 Gew.-% der in der Kammer befindlichen Teilchen aus der Granulationskammer mit dem Trocknungsgas austrägt,
c) anschließend die ausgetragenen Teilchen vom Gasstrom abtrennt,
d) die abgetrennten Teilchen der Wirbelschicht zumindest teilweise wieder zuführt (b - d: Zirkulation) während man
e) granulierte Teilchen mit einer Größe innerhalb des gewünschten Teilchengrößenbereichs kontinuierlich in einer Menge aus der Kammer abzieht, dass die Menge des sich in der Kammer befindlichen Feststoffs konstant bleibt.

3. Verfahren nach Anspruch 2, **dadurch gekennzeichnet, dass** man das Trocknungsgas über einen Anströmboden in die Kammer einleitet und entgegen der Gravitationskraft durchströmen lässt.

4. Verfahren gemäß Anspruch 2, **dadurch gekennzeichnet, dass** man 50 bis 100 Gew.-% der in der Granulationskammer befindlichen Feststoffpartikel kontinuierlich mit dem Trocknungsgas nach oben austrägt.

5. Verfahren nach Anspruch 2, **dadurch gekennzeichnet, dass** die Anströmgeschwindigkeit das 1 bis 10-fache, vorzugsweise das 1 bis 3-fache der Geschwindigkeit beträgt, die notwendig ist, um Teilchen der gewünschten Teilchengröße mit dem Trocknungsgasstrom aus der Kammer zu fördern.

6. Verfahren gemäß Anspruch 2, **dadurch gekennzeichnet, dass** die Zirkulationsrate pro Stunde dem 2 bis 100-fachen des Massen-hold-ups in der Granulationskammer entspricht.

7. Verfahren gemäß Anspruch 2, **dadurch gekennzeichnet, dass** das Trocknungsgas mit einer Temperatur im Bereich von 100 bis 450°C eingeleitet wird.

8. Verfahren gemäß Anspruch 2, **dadurch gekennzeichnet, dass** man die durch Fermentation von Mikroorganismen erhaltene Brühen, die Aminosäuren oder Vitamine enthalten, in die Kammer einsprüht, wobei die Brühe die Biomasse in ≥ 0 bis 100 % der während der Fermentation gebildeten Gesamtmenge enthält.

9. Verfahren gemäß Anspruch 2, **dadurch gekennzeichnet, dass** man wässrige Lösungen oder wässrige Suspensionen der Aminosäuren oder Vitamine in die Kammer einsprüht.

10. Verfahren gemäß den Ansprüchen 8 und 9, **dadurch gekennzeichnet, dass** es sich bei den Aminosäuren und Vitaminen um Verbindungen, ausgewählt aus der Gruppe L-Lysin, L-Threonin, L-Tryptophan, L-Arginin oder Calciumpantothenat oder Pantothensäure handelt.

11. Verfahren gemäß Anspruch 9, **dadurch gekennzeichnet, dass** es sich bei der Aminosäure um Methionin handelt.

12. Verfahren gemäß den Ansprüchen 9 bis 11, **dadurch gekennzeichnet, dass** man überhitzte gesättigte Lösungen, insbesondere von L-Threonin, in die Kammer einsprüht.

13. Verfahren gemäß Anspruch 12, **dadurch gekennzeichnet, dass** man in der Zulaufleitung für die überhitzten Lösungen zu den Düsen einen Vordruck von 1 bis 5 bar aufbaut.

14. Verfahren gemäß Anspruch 12, **dadurch gekennzeichnet, dass** man die Lösungen auf über 100°C bis 160°C überhitzt.

15. Verfahren gemäß Anspruch 1, **dadurch gekennzeichnet, dass** man mechanische Energie in die Wirbelschicht einträgt.

16. Verfahren gemäß Anspruch 15, dass die mechanische Energie durch bewegliche flächenförmige Gebilde in die Wirbelschicht eingetragen werden.

## Claims

1. Process for granulation of feedstuff additives comprising amino acids and/or vitamins and if appropriate constituents from the fermentation broth, **characterized in that** the granulation is carried out in a circulating fluidized bed wherein the inflow speed of the drying gas stream is adjusted such that 30% to 100% by weight of the solid particles, based on the fluidized bed in the granulator chamber, leave this chamber continuously in the upward direction, are then separated from the gas stream and are returned into the granulator chamber.

2. Process according to Claim 1, **characterized in that**
a) an aqueous suspension or an aqueous solution of the amino acid or of a vitamin are sprayed into a granulation chamber containing the fluidized bed,
b) 30% to 100% by weight of the particles in the chamber are discharged from the granulation chamber with the drying gas,
c) subsequently the discharged particles are removed from the gas stream,
d) the removed particles are at least partially fed back into the fluidized bed (b - d: via circulation) while
e) granulated particles having a size within the desired particle size range are continuously withdrawn from the chamber in an amount such that the amount of solid in the chamber remains constant.

3. Process according to Claim 2, **characterized in that** the drying gas is passed into the chamber through an inflow tray and is allowed to flow through the chamber against the force of gravity.

4. Process according to Claim 2, **characterized in that** 50% to 100% by weight of the solid particles in the granulation chamber are discharged continuously in the upward direction with the drying gas.

5. Process according to Claim 2, **characterized in that** the inflow speed is 1 to 10 times and preferably 1 to 3 times the speed necessary to convey particles of the desired particle size out of the chamber with the drying gas stream.

6. Process according to Claim 2, **characterized in that** the circulation rate per hour corresponds to 2 to 100 times the mass hold-up in the granulation chamber.

7. Process according to Claim 2, **characterized in that** the drying gas is introduced at a temperature in the range from 100 to 450°C.

8. Process according to Claim 2, **characterized in that** the broths which are obtained by fermentation of microorganisms and which contain amino acids or vitamins are sprayed into the chamber, the broth containing the biomass in ≥ 0% to 100% of the total amount formed during the fermentation.

9. Process according to Claim 2, **characterized in that** aqueous solutions or aqueous suspensions of the amino acids or vitamins are sprayed into the chamber.

10. Process according to Claims 8 and 9, **characterized in that** the amino acids and vitamins are compounds selected from the group consisting of L-lysine, L-threonine, L-tryptophan, L-arginine, calcium pantothenate and pantothenic acid.

11. Process according to Claim 9, **characterized in that** the amino acid is methionine.

12. Process according to Claims 9 to 11, **characterized in that** superheated saturated solutions, especially of L-threonine, are sprayed into the chamber.

13. Process according to Claim 12, **characterized in that** an admission pressure of 1 to 5 bar to the nozzles is built up in the feed line for the superheated solutions.

14. Process according to Claim 12, **characterized in that** the solutions are superheated to above 100°C to 160°C.

15. Process according to Claim 1, **characterized in that** mechanical energy is introduced into the fluidized bed.

16. Process according to Claim 15, **characterized in that** the mechanical energy is introduced into the fluidized bed by mobile flat structures.

## Revendications

1. Procédé de granulation d'acides aminés et/ou de vitamines et le cas échéant de constituants des additifs alimentaires pour animaux contenus dans le bouillon de fermentation, **caractérisé en ce qu'**on effectue la granulation dans un lit fluidisé à circulation, la vitesse de courant du flux de gaz de séchage étant réglée de telle sorte que 30 à 100% en poids des particules de solide, sur base du lit fluidisé dans la chambre de granulateur, quittent en continu cette chambre vers le haut, puis sont séparés du flux gazeux et reviennent dans la chambre de granulateur.

2. Procédé selon la revendication 1, **caractérisé en ce que** :
a) on pulvérise dans une chambre de granulation contenant le lit fluidisé une suspension aqueuse ou une solution aqueuse d'acide aminé ou d'une vitamine,
b) on sort de la chambre de granulation avec le gaz de séchage 30 à 100% en poids des particules se trouvant dans la chambre,
c) on sépare enfin du flux gazeux les particules sorties,
d) on réintroduit les particules du lit fluidisé séparées au moins en partie (b-d : circulation) pendant
e) qu'on soutire de la chambre en continu les particules mises en granulés avec une grandeur conforme au domaine de grandeur de particules souhaitée dans une quantité telle que la quantité de solide se trouvant dans la chambre reste constante.

3. Procédé selon la revendication 2, **caractérisé en ce qu'**on introduit le gaz de séchage dans la chambre par un fond d'afflux et qu'on le laisse s'écouler de manière anti-gravitationnelle.

4. Procédé selon la revendication 2, **caractérisé en ce qu'**on sort en continu par le gaz de séchage et vers le haut 50 à 100% des particules de solide se trouvant dans la chambre de granulation.

5. Procédé selon la revendication 2, **caractérisé en ce que** la vitesse d'afflux est d'une à dix fois, de préférence d'une à trois fois la vitesse qui est nécessaire pour amener les particules de la grandeur de particules souhaitée hors de la chambre avec le flux de gaz de séchage.

6. Procédé selon la revendication 2, **caractérisé en ce que** la vitesse de circulation par heure est de une à cent fois la retenue de masse dans la chambre de granulation.

7. Procédé selon la revendication 2, **caractérisé en ce que** le gaz de séchage est introduit à une température comprise entre 100 et 145°C.

8. Procédé selon la revendication 2, **caractérisé en ce qu'**on pulvérise dans la chambre les bouillons, obtenus par fermentation de microorganismes, et qui contiennent les acides aminés ou les vitamines, le bouillon contenant la biomasse en une quantité ≥ 0 à 100% de la quantité totale formée pendant la fermentation.

9. Procédé selon la revendication 2, **caractérisé en ce qu'**on pulvérise des solutions aqueuses ou des suspensions aqueuses des acides aminés ou vitamines dans la chambre.

10. Procédé selon les revendications 8 et 9, **caractérisé en ce qu'**il s'agit, pour les acides aminés et les vitamines, de composés choisis parmi le groupe des L-lysine, L-thréonine, L-tryptophane, L-arginine ou pantothénate de calcium ou acide pantothénique.

11. Procédé selon la revendication 9, **caractérisé en ce qu'**il s'agit, pour l'acide aminé, de méthionine.

12. Procédé selon les revendications 9 à 11, **caractérisé en ce qu'**on pulvérise dans la chambre des solutions saturées surchauffées, en particulier de la L-thréonine.

13. Procédé selon la revendication 12, **caractérisé en ce qu'**on instaure dans la conduite d'arrivée amenant les solutions surchauffées vers les buses, une surpression de 1 à 5 bars.

14. Procédé selon la revendication 12, **caractérisé en ce qu'**on surchauffe les solutions de plus de 100°C à 160°C.

15. Procédé selon la revendication 1, **caractérisé en ce qu'**on apporte dans le lit fluidisé une énergie mécanique.

16. Procédé selon la revendication 15, **caractérisé en ce que** l'énergie mécanique est apportée par des structures plates et mouvantes dans le lit fluidisé.
